# EUROPÄISCHE PATENTSCHRIFT

(11) **EP 4 136 374 B1**
(45) Veröffentlichungstag und Bekanntmachung des Hinweises auf die Patenterteilung: **09.09.2026**
(21) Anmeldenummer: 21728282.1
(22) Anmeldetag: 15.04.2021
(51) Int. Cl.: F16L 3/015, H02G 11/00, H02G 3/04, H02G 3/32

(54) **ENDBEFESTIGUNG EINER FLEXIBLEN UMHÜLLUNG FÜR REINRAUMANWENDUNGEN**
END FASTENING OF A FLEXIBLE CLADDING FOR CLEAN ROOM APPLICATIONS
FIXATION D'EXTRÉMITÉ D'UNE GAINE FLEXIBLE DESTINÉE À DES APPLICATIONS EN SALLE BLANCHE

(30) Priorität: 15.04.2020 DE 202020102090 U
(43) Veröffentlichungstag der Anmeldung: 22.02.2023
(73) Patentinhaber: igus SE & Co. KG, 51147 Köln (DE)
(72) Erfinder: HERMEY, Andreas, 53773 Hennef (DE); BARTEN, Dominik, 53340 Meckenheim (DE); MATTONET, Peter, 51515 Kürten (DE)
(74) Vertreter: Lippert Stachow Patentanwälte Rechtsanwälte
(86) Internationale Anmeldenummer: PCT/IB2021/000266
(87) Internationale Veröffentlichungsnummer: WO 2021/209819

(56) Entgegenhaltungen:
- EP-A1- 3 352 314
- IT-A1- GE20 100 131
- KR-B1- 101 983 056
- US-A1- 2020 284 318
- US-B2- 10 311 999
- US-B2- 8 561 949

## Beschreibung

Die Erfindung betrifft allgemein Leitungsführungsvorrichtungen für Leitungen, wie z.B. Kabel, Schläuche oder dgl., insbesondere in einer Reinraumanwendung, nämlich Leitungsführungsvorrichtungen die hin- und hergehend, verfahrbar sind unter Bildung eines Umlenkbogens zwischen zwei Trumen, die von einem ersten Ende und einem zweiten Ende ausgehen.

Die Erfindung betrifft insbesondere verbesserte Endbefestigungen für solche dynamischen Leitungsführungsvorrichtungen.

Die vorliegend als gattungsgemäß betrachteten Leitungsführungsvorrichtungen für Reinraumanwendungen haben typisch eine oder mehrere längliche und flexible Umhüllungen, die meist kanalartige Aufnahmen für Leitungen aufweisen, welche sich in Längsrichtung durchgehend erstrecken und in einer Querrichtung nebeneinanderliegen. Solche schlauchartigen Umhüllungen bzw. ihre Aufnahmen werden auch als sog. "Pods" bezeichnet und schützen unter anderem vor Austreten von Abriebpartikeln die beim Verfahren der Leitungen entstehen.

Für die meisten Anwendungen ist eine erste Endbefestigungsvorrichtung für das erste Ende und eine zweite Endbefestigungsvorrichtung für das zweite Ende der Leitungsführungsvorrichtungen vorgesehen. Die Endbefestigungsvorrichtungen dienen zum Anschluss der Enden an einer von zwei Anschlussstellen, z.B. einer Maschine, wobei mindestens eine der Anschlussstellen relativ zur anderen beweglich ist.

Ein Beispiel einer solchen Leitungsführungsvorrichtung mit speziell hierfür geeigneten Endbefestigungsvorrichtungen ist in WO 2021 004654 A1.

Eine weitere Leitungsführungsvorrichtung mit Stützketten und einer besonderen Endbefestigungsvorrichtung ist in DE 10 2012 100 290 B4 beschrieben, deren Bauweise jedoch relativ aufwendig ist, da zusätzliche Bauteile zum endseitigen Verschließen der Aufnahmen vorgesehen sind.

Bei gattungsgemäßer Bauweise hat die Leitungsführungsvorrichtung eine längliche, flexible Umhüllung, die hin- und hergehend verfahrbar ist, und eine Anzahl von kanalartigen, sich in einer Längsrichtung von einem ersten Ende zu einem zweiten Ende erstreckenden Aufnahmen für Leitungen aufweist. Die Aufnahmen sind in einer Querrichtung seitlich nebeneinanderliegend angeordnet, und die Umhüllung ist hin- und hergehend, insbesondere unter Bildung von zwei Trumen mit einem Umlenkbogens dazwischen verfahrbar. Weiterhin hat die Leitungsführungsvorrichtung zwei Stützketten, die sich Längsrichtung vom ersten Ende zum zweiten Ende der flexiblen Umhüllung erstrecken um diese zu stützen, und die eine Vielzahl einzelner Kettenglieder umfassen, die gelenkig miteinander verbunden sind. Jedes Kettenglied hat einen Körper mit zwei äußeren Seitenflächen und korrespondierende erste und zweite Gelenkelemente, die zur schwenkbaren Verbindung zweier Kettenglieder in einer Ebene im Wesentlichen senkrecht zur Querrichtung gestaltet sind. An den Enden der Umhüllung sind jeweils eine erste Endbefestigungsvorrichtung zum Festlegen des ersten Endes der Umhüllung und der Stützkette, und eine zweite Endbefestigungsvorrichtung zum Festlegen des zweiten Endes der Umhüllung und der Stützkette vorgesehen.

Eine derartige Endbefestigungsvorrichtung ist aus der DE 10 2012 100 533 A1 bekannt. Hierbei hat jede der endseitigen Endbefestigungsvorrichtungen mindestens ein Kettenglied-Halteelement zum Arretieren eines zugeordneten endseitigen Kettenglieds der Stützkette in Längsrichtung, insbesondere zwischen zwei Klemmteilen.

Eine weitere Endbefestigungsvorrichtung ist aus der KR101983056B1 bekannt. KR101983056B1 beschreibt eine Leitungsführungsvorrichtung mit zwei Stützketten, deren endseitigen Kettenglieder jeweils mittels Kettenglied-Halteelemente zwischen jeweils zwei Klemmplatten in Längsrichtung arretiert sind. Die jeweilige Stützkette braucht dabei zwei unterschiedliche endseitige Kettenglieder, die zum Arretieren in Längsrichtung bestimmt sind und dazu jeweils an einem Längsende des Kettenglieds einen T-förmigen Bereich aufweisen, welcher in eine T-Nut des entsprechenden Halteelements eingreift. Am anderen Längsende weist das eine endseitige Kettenglied eine Halterung für einen Gelenkbolzen auf, wobei das andere endseitige Kettenlied eine Gelenkaufnahme aufweist.

Eine Aufgabe der Erfindung ist es, die Bauweise der Endbefestigungsvorrichtung zu vereinfachen, insbesondere hinsichtlich der Teileanzahl, und die vorzugsweise die Montage und Demontage zu vereinfachen.

Zur Lösung der obengenannten Aufgabe wird ein Bausatz nach dem Oberbegriff aus Anspruch 1 zur Endbefestigung einer Leitungsführungsvorrichtung verbessert.

In einfachster Ausführungsform wird die Verbesserung bereits dadurch erzielt:
- dass die Stützkette zwei endseitige Kettenglieder aufweist, die beide jeweils zwei voneinander abgewandte Arretier-Vorsprünge umfassen bzw. aufweisen und/oder bilden, die jeweils in einer Richtung im Wesentlichen parallel zur Querrichtung der Stützkette bzw. Umhüllung, seitlich an einer der äußeren Seitenflächen vorstehen, insbesondere sowohl über die ersten und zweiten Gelenkelemente des endseitigen Glieds hinaus;
- dass die Kettenglied-Halteelemente beider Endbefestigungsvorrichtung jeweils zwei seitlich und in Querrichtung gegenüberliegende Halte-Vertiefungen aufweisen; und
- dass die Arretier-Vorsprünge beider endseitiger Kettenglieder zum Arretieren jeweils in die Halte-Vertiefungen im zugeordneten Kettenglied-Halteelement eingreifen, zum Arretieren der Stützkette in Längsrichtung.

Die Kombination der Gestaltung beidseitig seitlicher Arretier-Vorsprünge an den Endgliedern mit entsprechender Gestaltung spezieller Kettenglied-Halteelemente erlaubt es an beiden Enden der Stützkette eine gleichartig aufgebaute Arretierung bzw. Längssicherung der Stützkette zu verwenden, sodass die Teilezahl reduziert wird. Weiterhin kann die Handhabung spürbar vereinfacht werden, da die vorgeschlagene Lösung es erlaubt, mit jeweils zwei - vorzugsweise gleichartige Halteelementen - jedes Endglied zu sichern.

Die Arretier-Vorsprünge an den endseitigen Kettengliedern sind zweckbestimmt zur Arretierung und zusätzlich zu den Gelenkelementen, insbesondere zusätzlich zu Gelenkbolzen, vorgesehen, sodass diese ggf. auch robuster und z.B. mit größerem Durchmesser ausgeführt werden können.

Weiterhin erlaubt die vorgeschlagene Lösung ein Einklemmen der Umhüllung mit den Endgliedern zwischen geeignet gestalteten Halteelementen, so dass ein besserer Verschluss gegen Partikelaustritt aus der Umhüllung erzielt werden kann.

Entsprechend umfasst der vorgeschlagene Bausatz mindestens eine gattungsgemäße Stützkette, vorzugsweise zwei Stützketten, die sich Längsrichtung von einem ersten Ende zu einem zweiten Ende erstreckt, und die eine Vielzahl einzelner Kettenglieder umfasst, die gelenkig miteinander verbunden sind, wobei jedes Kettenglied einen Körper mit zwei äußeren Seitenflächen und korrespondierende erste und zweite Gelenkelemente aufweist, die zur schwenkbaren Verbindung zweier Kettenglieder in einer Ebene, die im Wesentlichen senkrecht zu einer Querrichtung der Längsrichtung liegt, gestaltet sind. Weiterhin umfasst der Bausatz zwei Kettenglied-Halteelemente zum Arretieren in Längsrichtung jeweils eines zugeordneten endseitigen Kettenglieds am ersten bzw. zweiten Ende der Stützkette zwischen zwei Klemmplatten.

Erfindungsgemäß zeichnet sich der Bausatz für eine Endbefestigung dadurch aus,
i) dass die Stützkette zwei endseitige Kettenglieder aufweist, die zum Arretieren in Längsrichtung bestimmt sind und beide jeweils zwei voneinander abgewandte Arretier-Vorsprünge umfassen bzw. aufweisen und/oder bilden, die jeweils in Richtung im Wesentlichen parallel zur Querrichtung, insbesondere seitlich an einer der äußeren Seitenflächen und über die ersten und zweiten Gelenkelemente hinaus vorstehen;
ii) dass beide Kettenglied-Halteelemente jeweils zwei seitlich und in Querrichtung gegenüberliegende Halte-Vertiefungen aufweisen; und
iii) dass die Arretier-Vorsprünge beider endseitiger Kettenglieder zum Arretieren mit jeweils beiden Halte-Vertiefungen im zugeordneten Kettenglied-Halteelement eingreifend zusammenwirken.

Ungeachtet der Bauweise der verwendeten Umhüllung und Stützkette, sind mit diesem Bausatz ebenfalls die vorgenannten Vorteile erzielbar, d.h. der Bausatz ist zur Realisierung einer verbesserten Endbefestigung geeignet und bestimmt.

In einer Ausführungsform kann vorgesehen sein, dass jedem der endseitigen Kettenglieder jeweils ein Paar Kettenglied-Halteelemente zugeordnet sind, die einander zugewandt und bezüglich einer Hauptebene parallel zur Längsrichtung und Querrichtung gegenüberliegend angeordnet bzw. anordenbar sind, und jeweils zwei in Längsrichtung verlaufende gegenüberliegenden Seitenwände aufweisen, wobei jedes Kettenglied-Halteelement eines Paars zwischen den Seitenwänden eine zur Hauptebene und in Längsrichtung offene Aufnahme für ein endseitiges Kettenglied bildet, wobei die Aufnahme vorzugsweise wenigstens 25% bis zu nahezu 50% der Bauhöhe des endseitigen Kettenglieds aufnimmt, wobei in jeder Seitenwand je eine Halte-Vertiefung vorgesehen ist, insbesondere zur Aufnahme und zur Hauptebene hin offen vorgesehen ist, sodass zwei gegenüberliegende Halte-Vertiefungen jeweils einen der Arretier-Vorsprünge beidseitig zumindest teilweise, vorzugsweise im Wesentlichen vollständig umgreifen.

Hierbei können alle Kettenglied-Halteelemente vorzugsweise baugleich ausgeführt sein, was die Teileanzahl reduziert und Handhabung vereinfacht.

In einer Ausführungsform kann vorgesehen sein, dass die Arretier-Vorsprünge vorzugsweis in einem in Längsrichtung mittleren Bereich des Kettenglieds zwischen Endbereichen mit den korrespondierende ersten und zweiten Gelenkelementen vorgesehen sind.

In einer vorteilhaften Ausführungsform der Kettenglied-Halteelemente kann vorgesehen sein, dass die in Längsrichtung verlaufenden gegenüberliegenden Seitenwände jedes Kettenglied-Halteelements eine obere Fläche im Wesentlichen parallel zur Hauptebene aufweisen, an welchen Greif- bzw. Krallenelemente zur Längssicherung einer die Stützkette umgebenden Umhüllung vorgesehen sind. Somit wird eine bessere Sicherung der gesamten Leitungsführung inkl. Umhüllung erzielt.

In einer weiteren vorteilhaften Ausführungsform der Kettenglieder-Halteelemente kann vorgesehen sein, dass alle Kettenglied-Halteelemente baugleich und einteilig ausgeführt sind und vorzugweise aus Kunststoff hergestellt sind, insbesondere als Spritzgussteile.

In einer weiteren vorteilhaften Ausführungsform der Kettenglieder-Halteelemente kann das bzw. jedes der Kettenglied-Halteelemente an einer Vorderseite eine zur Hauptebene und in Längsrichtung offene Aufnahme für ein endseitiges Kettenglied bildet und an einer Rückseite an beiden Längsenden einander zugewandte Zungen aufweist zur Verbindung, insbesondere in Art einer Feder-Nut-Verbindung, mit jeweils einer von zwei abgewandten stirnseitigen Haltenuten an einer Klemmplatte der Endbefestigung.

In einer vorteilhaften Ausführungsform der Kettenglieder der Stützkette kann vorgesehen sein, dass die Kettenglieder mit einem einteiligen Körper aus Kunststoff hergestellt sind, insbesondere als Spritzgussteile. Hierbei können die zwei voneinander abgewandten Arretier-Vorsprünge eines endseitigen Kettenglieds jeweils durch die Enden eines eine Queröffnung im Kettenglied durchgreifenden und beidseitig seitlich vorstehenden separaten Bolzens, Zapfens oder dgl. gebildet sind. Alternativ können die zwei voneinander abgewandten Arretier-Vorsprünge eines endseitigen Kettenglieds einteilig mit dem Körper des Kettenglieds hergestellt sein.

Bevorzugt sind die Endglieder und Kettenglied-Halteelemente so ausgeführt, dass die Arretier-Vorsprünge formschlüssig und/oder werkzeugfrei lösbar in den Halte-Vertiefungen gehalten sind.

Weiterhin wird auch die Verwendung einer entsprechend verbesserten Stützkette nach dem Oberbegriff aus Anspruch 8 vorgeschlagen. Diese zeichnet sich in entsprechender Weise dadurch aus, dass die Stützkette zwei endseitige Kettenglieder aufweist, die beide jeweils zwei voneinander abgewandte Arretier-Vorsprünge umfassen, welche insbesondere zusätzlich zu den ersten und zweiten Gelenkelemente vorgesehen sind, und jeweils in Richtung im Wesentlichen parallel zur Querrichtung vorstehen, insbesondere über die ersten und zweiten Gelenkelemente hinaus seitlich an einer der äußeren Seitenflächen. Weiterhin zeichnen sich die beiden endseitigen Kettengliedern dadurch aus, dass an jedem Endglied die Arretier-Vorsprünge zum Arretieren der Stützkette in Längsrichtung durch Zusammenwirken mit entsprechenden Halte-Vertiefungen einer Endbefestigung vorgesehen sind. Hierbei sind an mindestens einem, vorzugsweise an beiden endseitigen Kettenglied(ern), die Arretier-Vorsprünge am mittleren Bereich, insbesondere an einem Rumpfbereich, vorgesehen.

Der Bausatz bzw. die Leitungsführungsvorrichtung können ferner eine verbesserte Klemmplatte umfassen, die zwei kurze Schmalseiten parallel zu einer Längsrichtung hat, die einer Längsrichtung einer festzulegenden Stützkette entspricht, und zwei lange Hauptseiten bzw. Stirnseiten parallel zu einer Querrichtung, sowie zwei abgewandte Hauptflächen parallel zu einer Hauptebene.

An jeder Hauptseite bzw. Stirnseite kann eine in Längsrichtung offene stirnseitige Haltenut vorgesehen sein, welche mit durchgehend gleichem Querschnitt von der einen zur anderen Schmalseite verläuft und dort in Querrichtung offen mündet, sodass insbesondere Halteelemente, z.B. für Enden von zu führenden Leitungen oder für endseitige Kettenglieder, mittels in beide Haltenuten eingreifender Zungen in Querrichtung einschiebbar und verschiebbar an der Klemmplatte montierbar sind.

Die Klemmplatte kann plattenartig, insbesondere mit einer rechteckigen Grundfläche, und vorzugsweise mit ebenen, flächigen Hauptflächen ausgeführt sein.

Diese flache Bauweise reduziert den nötigen Materialaufwand und ermöglicht, baugleiche Klemmplatten mit modularen Spezialverbindern für unterschiedliche Bauhöhen einzuklemmender Umhüllungen, d.h. mit unterschiedlichen Leitungsdurchmessern zu nutzen. Die Klemmplatte kann aus einem Metallprofil, insbesondere Extrusionsprofil, z.B. aus Aluminium, das bereits die Haltenuten aufweist zugeschnitten werden und ist kostengünstig herstellbar.

Die Klemmplatte kann zur vereinfachten Handhabung bezüglich mindestens zwei von drei Mittelebenen spiegelsymmetrisch ausgeführt sein. Als Mittelebenen sind hierbei bezeichnet: die Mittelebene parallel zur Hauptebene, die Mittelebene senkrecht zur Hauptebene entlang der Längsrichtung und die Mittelebene senkrecht zur Hauptebene entlang der Querrichtung.

Die Klemmplatte kann bezüglich allen drei Mittelebenen im Wesentlichen spiegelsymmetrisch ausgeführt ist.

Bevorzugt hat die Klemmplatte beidseitig an den Schmalseiten jeweils mindestens zwei, vorzugsweise drei, Befestigungslöcher. Diese sind bevorzugt entlang der Längsrichtung und nahe den Schmalseiten angeordnet.

Ferner betrifft die Erfindung einen Bausatz, umfassend zwei Klemmplatten sowie mindestens vier Verlängerungsschrauben, mit je einem Außengewinde sowie einem Innengewinde am Schraubenkopf passend zum Außengewinde, sowie entsprechende Innengewinde-Buchsen passend zum Außengewinde. Ein Vorteil hierbei ist, dass die Endbefestigung Lagenweise montiert und demontiert werden kann, was insbesondere beim Austausch nur einer von mehreren Umhüllungen die Handhabung sehr vereinfacht.

In Verbindung mit einer Schraubverbindung kann jede Klemmplatte an mindestens zwei Befestigungslöchern jeder Schmalseite, jeweils beidseitig gegenüberliegend am Befestigungsloch Senkungen aufweisen. Je nach gewählter Schraube bzw. Buchse kann insbesondere eine konische Senkung zur Aufnahme eines Schraubenkopfes und eine zylindrische Senkung zum Einpressen einer Innengewinde-Buchse vorgesehen sein, d.h. nur insoweit ist die Klemmplatte vorzugsweise mit ihren Befestigungslöchern nicht symmetrisch zur Mittelebene parallel zur Hauptebene, ansonsten jedoch vorzugsweise bezüglich allen drei Mittelebenen spiegelsymmetrisch.

Bevorzug sind im Bausatz bzw. System Verlängerungsschrauben unterschiedlicher Länge vorgesehen, insbesondere in drei oder mehr unterschiedlichen Längen. So kann durch passende Auswahl der Schrauben die Auswahl der nutzbaren Höhe zwischen zwei Klemmplatten erfolgen.

Eine Endbefestigungsvorrichtung hat vorzugweise Endglieder der Stützkette und/oder Kettenglied-Halteelemente nach einem der vorstehenden Ausführungsbeispiele und auch eine Klemmplatte nach einem der vorstehenden Ausführungsbeispiele.

Alle vorstehend beschriebenen Merkmale der einzelnen Bauteile, sind auch vorteilhaft im Baukasten bzw. Bausatz kombiniert anwendbar.

Weitere Einzelheiten und Vorteile der Erfindung lassen sich, ohne Beschränkung der Allgemeinheit des Vorstehenden, der nachfolgenden Erläuterung bevorzugter Ausführungsbeispiele anhand der beigefügten Zeichnungen entnehmen. Merkmale mit entsprechender bzw. identischer Struktur oder Funktion haben entsprechende Bezugszeichen und werden ggf. nicht wiederholt beschrieben.

Hierbei zeigen:
- FIG.1A-1B:: eine schematische Darstellung einer gattungsgemäßen Leitungsführungseinrichtung in perspektivischer Ansicht (FIG.1A) und in einem Querschnitt quer zur Längsrichtung (FIG.1B) gemäß dem Stand der Technik z.B. aus DE 20 2019 103 276 U1;
- FIG.2A-2C: ein erstes Ausführungsbeispiel einer Endbefestigung für eine Leitungsführungseinrichtung gemäß FIG.1A-1B in Perspektivansicht montiert (FIG.2A) und in Explosionsdarstellung (FIG.2B) und in Seitenansicht (FIG.2C);
- FIG.2D: eine Variante einer Endbefestigung nach FIG.2A-2B in Perspektivansicht mit anderen Zugentlastungselementen;
- FIG.3A-3C:: Ansichten einer Klemmplatte, in Draufsicht (FIG.3A), in Seitenansicht (FIG.3B) und im Querschnitt (FIG.3C: gemäß Schnittlinie M-M aus FIG.3A)
- FIG.4A-4D:: Ansichten eines Bausatzes mit mehreren Klemmplatten nach FIG.3A-3C, in einem montierten Beispiel (FIG.4A-4B), ohne befüllte Umhüllung, sowie speziellen Verlängerungsschrauben (FIG.4C) und Gewindebuchsen (FIG.4B), für eine Endbefestigung nach FIG.2;
- FIG.5A-5C:: perspektivische, z.T. aufgebrochene Explosionsansichten eines Ausführungsbeispiels einer verbesserten Endbefestigung mit Ausführungsbeispielen von Endgliedern der Stützkette, in Gesamtansicht mit Umhüllung und Stützkette an einem Ende (FIG.5A) sowie Teilansichten beider Enden, mit jeweils einem von zwei zu befestigenden Endgliedern der Stützkette (FIG.5B/FIG.5B);
- FIG.6A-6D:: beide Endglieder aus FIG.5B-5C, jeweils in Draufsicht und in einem Längsschnitt (horizontal); und
- FIG.7A-7D:: ein Ausführungsbeispiel eines Kettenglied-Halteelements, das als Gleichteil in beiden Endbefestigungen aus FIG.5A-5C oder auch FIG.1-2 bzw. FIG.4 verwendbar ist.

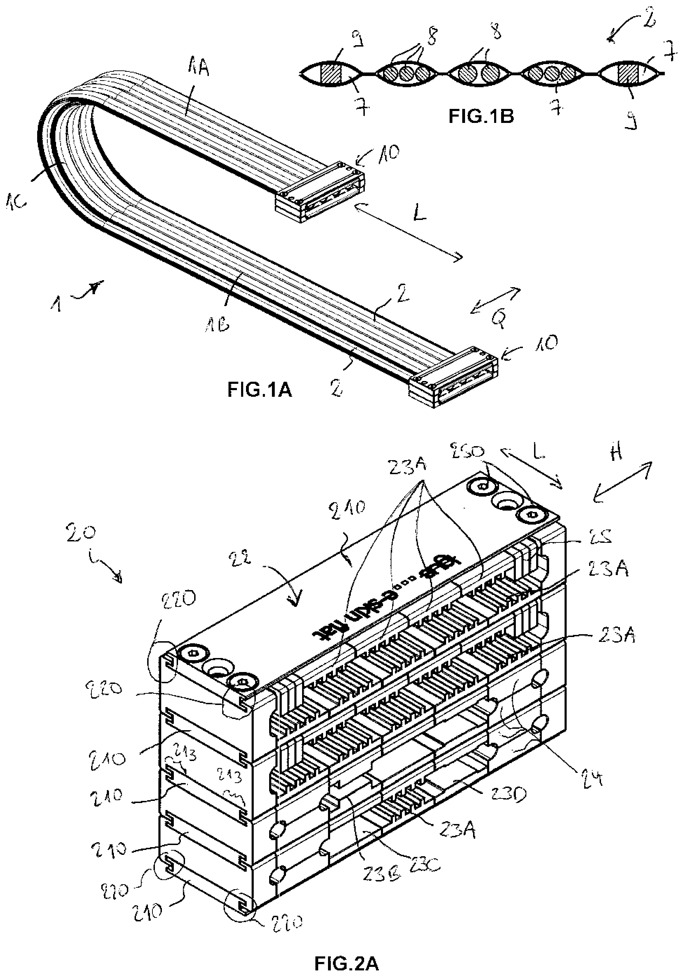

FIG.1A-1B zeigen ein Ausführungsbeispiel einer dynamischen d.h. hin und her verfahrbaren Leitungsführungseinrichtung 1 für Versorgungsleitungen 8, z.B. für die Strom- und Datenversorgung in einer Maschine. Die Leitungsführungseinrichtung 1 ist linear verfahrbar und bildet dabei ein bewegliches Obertrum 1A, ein ruhendes Untertrum 1B und dazwischen einen mitfahrenden Umlenkbogen 1C. Das Obertrum 1A ist in Längsrichtung L der Leitungsführungseinrichtung 1 verfahrbar. Der Umlenkbogen 1C hat einen vorgegebenen Umlenkradius bzw. Biegeradius um eine Querrichtung Q, senkrecht zur Längsrichtung L. Die Leitungsführungseinrichtung 1 umfasst in FIG.1A zwei in die Längsrichtung L langgestreckte flexible Umhüllungen 2 die geschachtelt übereinander liegen. Die Raumlage ist jedoch beliebig, die Leitungsführungseinrichtung 1 kann z.B. auch vertikal verfahren. Jede Umhüllung 2 ist insgesamt schlauchartig und ausreichend flexibel ausgeführt, u.a. durch geeignete Gestaltung und/oder Materialwahl, um eine reversibel biegsame Krümmung des Umlenkbogens 1C mit geringem Kraftaufwand zu erlauben und der Fahrbewegung eines beweglichen Anschlusses bzw. Mitnehmers mit möglichst geringem Widerstand zu folgen.

Jede staubschützende Umhüllung 2 (auch "Pod" genannt) ist insbesondere staubdicht ausgeführt und dient primär dazu, das Austreten von Partikeln, die insbesondere durch Abrieb der Leitungen und/oder Stützkette unvermeidbar entstehen, nach außen zu vermeiden. Die Bauweise der schlauchartigen Umhüllung 2 kann z.B. wie in DE 20 2019 103 276 U1 (dort zu FIG.9-10) beschrieben gewählt sein, deren Lehre insoweit zur Verkürzung hier einbezogen ist. Auch andere schlauchartige Umhüllungen 2, z.B. aus dem einleitend genannten Stand der Technik, sind verwendbar.

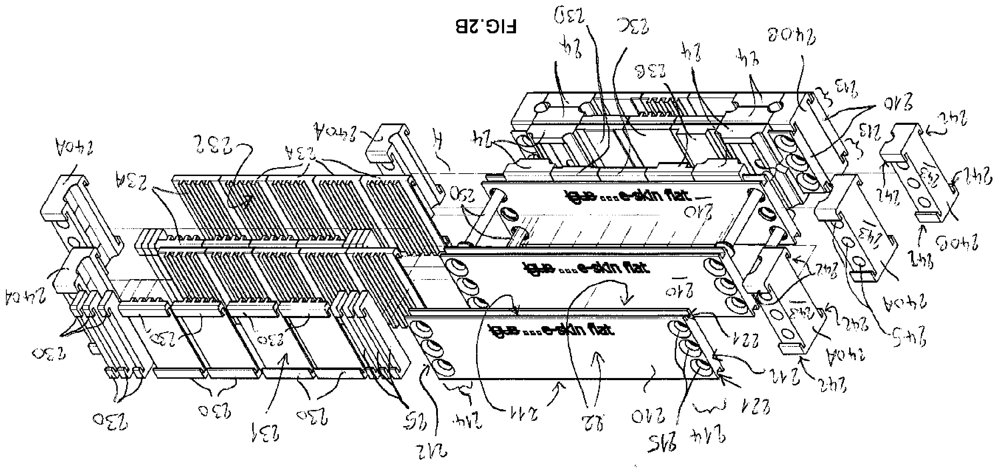

FIG.1A zeigt weiterhin zwei Endbefestigungsvorrichtungen 10, die jeweils an einem Ende der Leitungsführungseinrichtung 1 vorgesehen sind. Die Leitungsführungseinrichtung 1 wird anhand der Endbefestigungsvorrichtungen 10 an jeweils einer von zwei relativ zueinander beweglichen Anschlussstellen, bspw. an einer Maschine oder Anlage (nicht gezeigt), angeschlossen und befestigt. FIG.1A zeigt Endbefestigungsvorrichtungen gemäß DE 20 2019 103 276 U1 (vgl. dort FIG.13A-13D). Bevorzugte, erfindungsgemäße Ausführungsformen der Endbefestigungsvorrichtungen werden weiter unten zu FIG.2-8 erläutert, anstelle derjenigen aus FIG.1A.

FIG.1B zeigt rein beispielhaft eine mögliche Innenaufteilung zu einer der beiden Umhüllungen 2 in einem Querschnitt senkrecht zur Längsrichtung L. Die Umhüllung 2 kann z.B. einer Mehrzahl einzelner aus Kunststoff hergestellter Hülleinheiten zusammengesetzt sein (nicht gezeigt) oder einen einteiligen Schlauch mit mehreren Kanälen als Aufnahmen 7 bilden. In FIG. 1B hat die Umhüllung 2 beispielhaft fünf kanalartige Aufnahmen 7 für eine oder mehrere Versorgungsleitungen 8 bzw. Leitungsbündel sowie zwei Stützketten 9 in den äußeren Aufnahmen, welche den Radius des Umlenkbogens 1C vorgeben und eine freitragende Länge des ausgefahrenen Obertrums 1A stützen. Die Umhüllung 2 ist aus einem biegsamen weichelastischen Kunststoff, insbesondere einem Thermoplast, z.B. PE, PU, TPU, PTFE, expandiertes PTFE, PP oder dgl., hergestellt und hat über ihre Länge einen durchgehend gleichbleibenden Querschnitt senkrecht zur Längsrichtung L. Die Umhüllung 2 kann preiswert als Strangware in geeigneter Kunststoff-Extrusionstechnik hergestellt und auf eine geeignete Länge, z.B. von ca. 100mmm bis ca. 1500mm, abgelängt werden. Alle Aufnahmen 7 innerhalb der Umhüllung 2 sind räumlich voneinander getrennt und liegen in Querrichtung Q nebeneinander. Die Umhüllung 2 umgibt die Leitungen 8 bzw. Stützketten 9 über die Längserstreckung staubdicht und vermeidet somit das Austreten von Partikeln, die bspw. durch Abrieb oder Abnutzung entstehen.

FIG.2A-2B zeigen ein besonders bevorzugtes Beispiel einer erfindungsgemäßen Endbefestigungsvorrichtung 20. Die Endbefestigungsvorrichtung 20 ist an beiden Enden der Leitungsführungseinrichtung 1 verwendbar. Sie hat eine Anzahl baugleicher Klemmplatten 210, die in FIG.2A-2D als im Wesentlichen flache rechteckige Platten aus Metall, z.B. aus einem Aluminium-Extrusionsprofil hergestellt sind. Die Klemmplatten 210 bilden an jeder Seite eine Hauptfläche 22 zum Ausüben einer Klemmkraft und sind mit ihrer Hauptrichtung H, die der Längserstreckung der Klemmplatte 210 entspricht, senkrecht zur Längsrichtung L der Umhüllung 2 (vgl. FIG.1A) angeordnet. Alle Klemmplatten 210 sind baugleich und haben zwei lange Stirnseiten 211 in der Hauptrichtung H, quer zu welchen die Leitungen 8 durchgeführt werden, und zwei kurze Schmalseiten 212.

Die Endbefestigungsvorrichtung 20 in FIG.2A-2D ist mehrlagig aufgebaut, für mehrere Umhüllungen 2 übereinander, und umfasst in jeder Lage eine Anzahl modularer Zugentlastungselemente 23A, 23B, 23C, 23D usw. unterschiedlicher Bauart. In jeder von hier beispielhaft vier Lagen liegen sich jeweils paarweise identische Zugentlastungselemente 23A, 23B, 23C bzw. 23D zwischen zwei Klemmplatten 210 gegenüber. Die Zugentlastungselemente 23A, 23B, 23C, 23D haben jeweils eine Klemmfläche 232 zum kraftschlüssigen Halten einer oder mehrerer Leitungen 8 (vgl. FIG.1B) in der jeweiligen kanalartigen Aufnahme 7 mitsamt der Umhüllung 2. Die Zugentlastungselemente 23A, 23B, 23C, 23D sind modular und zur aneinander gereihten und gegenüberliegenden Anordnung zwischen zugewandten Hauptflächen 22 der Klemmplatten 210 gestaltet.

Wie am besten aus der Seitenansicht FIG.2C ersichtlich, hat jede der baugleichen Klemmplatten 210 jeweils einen Haltebereich 213, u.a. für Zugentlastungselemente 23A, 23B, 23C, 23D usw., welcher diese gegen Verschiebung in Längsrichtung L an der jeweiligen Klemmplatte 210 hält. Wie am besten aus FIG.2B-2C ersichtlich haben die Klemmplatten 210 dazu jeweils an ihren langen Stirnseiten 211 ausgeprägte, voneinander abgewandte Haltebereiche 213 mit einem hier stirnseitigen Profilquerschnitt 220 mit jeweils einer Hinterschneidung im Querschnitt bzw. Seitenansicht betrachtet, wobei die Hinterschneidung in FIG.2A-2D durch eine etwa U-förmige bzw. in Hauptrichtung durchgehend gleichbleibende Haltenut 221 bzw. Vertiefung an den Stirnseiten 211 ausgeführt ist. Die Haltenut 221 ist hier zu beiden Mittelebenen senkrecht und parallel zu den Hauptflächen 22 jeweils spiegelsymmetrisch ausgeführt und hat einen gerundeten rechteckigen Querschnitt, mit etwa der halben Bauhöhe der Klemmplatte 210.

Die verschiedenen Zugentlastungselemente 23A, 23B, 23C, 23D usw. haben jeweils zwei Verbindungsbereiche 230, hier mit klauenförmigem Querschnitt zur Hauptrichtung H, welcher zum formschlüssigen Hintergreifen der Hinterschneidung bzw. Haltenut 221 im Profilquerschnitt 220 des Haltebereichs 213 der Klemmplatte 210, gestaltet ist, d.h. zum Eingreifen in die stirnseitige Haltenut 221 wie aus FIG.2A-2D ersichtlich. Die Verbindungsbereiche 230 sind jeweils an beiden Stirnseiten als baugleiche, spiegelsymmetrische Klauen ausgeführt, wobei jede Klaue eines Verbindungsbereichs 230 nicht ganz die Hälfte der freien Höhe der stirnseitigen Haltenut 221 einnimmt, sodass beidseitig an jeder Klemmplatte 210 jeweils Zugentlastungselemente 23A, 23B, 23C, 23D mit entsprechenden Verbindungsbereichen 230 in den Profilquerschnitt 220 des Haltebereichs 213 eingreifen können, vgl. FIG.2C.

Zwischen den gegenüberliegenden Verbindungsbereichen 230 ist an der Rückseite der Zugentlastungselemente 23A, 23B, 23C, 23D eine Aufnahme 231 ausgebildet, welche den Querschnitt der jeweils zugeordneten Klemmplatte 210 etwa hälftig aufnimmt. So kann ein und dieselbe Klemmplatte 210 für zwei aufeinanderfolgende Lagen von Umhüllungen 2 genutzt werden, wie die drei in Höhenrichtung innenliegenden Klemmplatten 210 in FIG.2A veranschaulichen. Die Zugentlastungselemente 23A, 23B, 23C, 23D haben unterschiedliche Klemmflächen und eine im Wesentlichen identische Grundfläche zur modularen Verwendung. Die Zugentlastungselemente 23A, 23B, 23C, 23D können aus demselben weichelastischen und abriebarmen Kunststoff wie die Umhüllungen 2 hergestellt sein (s. oben).

Durch die Gestaltung der Verbindungsbereiche 230 welche formschlüssig in die Hinterschneidung(en) der Klemmplatten 210 eingreifen, sind die Zugentlastungselemente 23A, 23B, 23C, 23D nicht nur in Längsrichtung L, sondern auch in Richtung senkrecht zur Hauptfläche 22 an der jeweiligen Klemmplatte 210 verliersicher gehalten werden.

In FIG.2A-2D sind weiterhin besondere Befestigungselemente 24 für Stützketten 9 gezeigt, welche die Stützketten 9 in Längsrichtung L an der Endbefestigungsvorrichtung 20 sichern. Die Befestigungselemente 24 haben an ihren Rückseiten baugleiche Verbindungsbereiche 230 und Aufnahmen 231 (nicht bezeichnet). Entsprechendes gilt auch für zusätzliche Abstandhalter 25 in den oberen beiden Lagen aus FIG.2A-2D. Diese Abstandhalter 25 erlauben einen seitlichen Versatz in Querrichtung Q zwischen den gegenüberliegen Zugentlastungselementen 23A, sodass in den beiden oberen Lagen jeweils zwei aufeinander liegende Umhüllungen, wie in FIG.1A gezeigt, gemeinsam zwischen zwei Klemmplatten 210 festgelegt werden können. Die Abstandhalter 25 haben, wie die Befestigungselemente 24, ebenfalls im Querschnitt zu den Verbindungsbereiche 230 identische Klauen zur Halterung an den Klemmplatten 210. Die Befestigungselemente 24 und Abstandhalter 25 sind damit ebenfalls in Längsrichtung L und senkrecht zu den Hauptflächen 22 sicher an den Klemmplatten 210 gehalten und fixierbar.

Wie FIG.2A-2D weiter zeigen mündet der Profilquerschnitt 220 beidseitig an den kurzen Schmalseiten 212 nach Außen d.h. seitlich offen zugänglich. Der Profilquerschnitt 220 ist über die gesamte Länge in Hauptrichtung H bzw. zwischen den Schmalseiten 212, durchgehend gleichbleibend. Hierdurch können Zugentlastungselemente 23A, 23B, 23C, 23D, Befestigungselemente 24 und Abstandhalter 25 wahlweise modular bzw. nach Bedarf an den Klemmplatten angebracht und an jeder Position positioniert werden durch Einschieben entlang der Hauptrichtung H.

FIG.2B veranschaulicht zudem beispielhaft verzahnte Klemmflächen 232 zum kraftschlüssigen Halten der Leitungen 8 mit der Umhüllung 2 an den Zugentlastungselemente 23A (in den oberen Lagen). Hierbei haben die Klemmflächen 232 in Längsrichtung L erstreckte alternierend zwischen Vertiefungen vorstehende Zahnleisten bzw.

Kammzinken, welche eine gewisse Verformbarkeit zur Anpassung an verschiedene Durchmesser der Leitungen 8 erlauben und zugleich einen guten Reibschluss erzielen. Beispielhaft sei nur die Klemmfläche 232 der kurz beschrieben. Auch flächige Gestaltungen sind möglich, wie etwa bei den Zugentlastungselemente 23B, 23C, 23D welche sich vor allem durch unterschiedliche Bauhöhen bzw. - tiefen der jeweiligen Klemmflächen unterscheiden. Weiterhin sind auch Zugentlastungselemente 23E, 23F, 23G mit konkaven oder konkav/konvexen Klemmflächen, wie in der Variante von FIG.2D dargestellt verwendbar. Auch diese Zugentlastungselemente 23E, 23F, 23G haben Verbindungsbereiche 230, die mit den Haltebereichen 213 zusammenwirken. Die Endbefestigungsvorrichtung 20' in der Variante aus FIG2D unterscheidet sich im Wesentlichen durch diese anders geformten Zugentlastungselemente 23E, 23F, 23G.

Wie FIG.2A-2D weiter zeigen hat die Endbefestigungsvorrichtung 20 gemäß einem weiteren Aspekt jeweils zwischen seitlichen Endbereichen 214 der Klemmplatten 210 zwei als separate Bauteile vorgesehene Plattenverbinder 240A; 240B, um jeweils zwei Klemmplatten 210 paarweise an jeweils einem von beiden seitlichen Endbereichen 214 zu greifen und zu verbinden. Hierzu hat jeder Plattenverbinder 240A, 240B zwei gegenüberliegende Klammerbereiche 242, die gemäß FIG.2A-2D in ihrer Bauweise den klauenartigen Verbindungsbereichen 230 der Zugentlastungselemente 23A... 23G entsprechen, d.h. zwei einander zugewandte stirnseitige Klauen aufweisen. Die Plattenverbinder 240A, 240B haben jedoch jeweils an ihrer Ober- und Unterseite jeweils einen entsprechenden Klammerbereich 242 zur Verbindung mit zwei Klemmplatten 210. Durch die Plattenverbinder 240A, 240B werden die Klemmplatten 210 jeweils paarweise miteinander verbunden und parallel in vorbestimmten Abstand aneinander gehalten. Hierzu greifen die gegenüberliegenden Klammerbereiche 242 jeweils paarweise zumindest formschlüssig in die stirnseitige Haltenut 221 der Klemmplatten 210, analog zu den Verbindungsbereichen 230 (vgl. FIG.2C). Im Beispiel aus FIG.2A-2D sind zwei Typen Plattenverbinder 240A; 240B gezeigt, die sich lediglich durch unterschiedliche Bauhöhe unterscheiden, sodass durch Auswahl der Plattenverbinder 240A; 240B der Freiraum zwischen den paarweise gegenüberliegenden Zugentlastungselementen 23A... 23G eingestellt werden kann. Zwischen zwei Klemmplatten 210 werden jeweils an beiden Endbereichen 214 baugleiche Plattenverbinder 240A bzw. 240B eingesetzt. Diese sind ebenfalls seitlich in der Hauptrichtung H einschiebbar und wieder lösbar. Die Plattenverbinder 240A, 240B haben einen blockförmigen Stützkörper 243, hier aus Vollmaterial insbesondere einem formfesten, unelastischen Kunststoff wie z.B. einem faserverstärkten Polyamid. Der Stützkörper 243 einen vertikalen Abstandhalter zu Vorgabe des vertikalen Abstands zwischen den Klemmplatten 210. Die Plattenverbinder 240A, 240B unterscheiden sich insbesondere durch die Bauhöhe des Stützkörpers 243 und haben ansonsten identische Bauweise, insbesondere ihrer vertikal und horizontal spiegelsymmetrischen Klammerbereiche 242. Die Plattenverbinder 240A, 240B können einseitig eine konkave Aussparung zum Aufnahmeraum für die Umhüllungen aufweisen.

Die Plattenverbinder 240A, 240B haben jeweils identisch angeordnet in ihren Stützkörpern 243 drei in Längsrichtung L verteilte Durchgangslöcher 245 für Schraubverbindungen durch Schrauben 250. Die Durchgangslöcher 245 sind passend zur fluchtenden Anordnung mit entsprechenden Durchgangslöchern bzw. Befestigungslöchern 215 für die Schrauben 250 in den Klemmplatten 210 angeordnet. Die beiden äußeren Schrauben 250 in den Endbereichen 214 können zur seitlichen Sicherung der fertig montierten Endbefestigungsvorrichtung 20; 20' genutzt werden, wie in FIG.2A/2D zu sehen. Hierzu kann in der unteren Klemmplatte 210 unterseitig jeweils in den entsprechenden Befestigungslöchern 215 eine Gewindebuchse eingeschlagen sein, oder eine Schraubenmutter verwendet werden. Die mittleren Befestigungslöchern 215, 245 können zur Befestigung der Endbefestigungsvorrichtung 20; 20' an der Anschlussstelle, d.h. am Festpunkt oder Mitnehmer genutzt werden (nicht gezeigt).

Wie aus FIG.2A-2D weiter ersichtlich dienen die Verbindungsbereiche 230 der Zugentlastungselementen 23A... 23G und auch der Befestigungselemente 24 und Abstandhalter 25 zugleich als Kantenschutz an den Stirnseiten 211 der Klemmplatten 210, sodass die Leitungen 8 nicht in Kontakt mit den Stirnseiten 211 der Klemmplatten 210 geraten können.

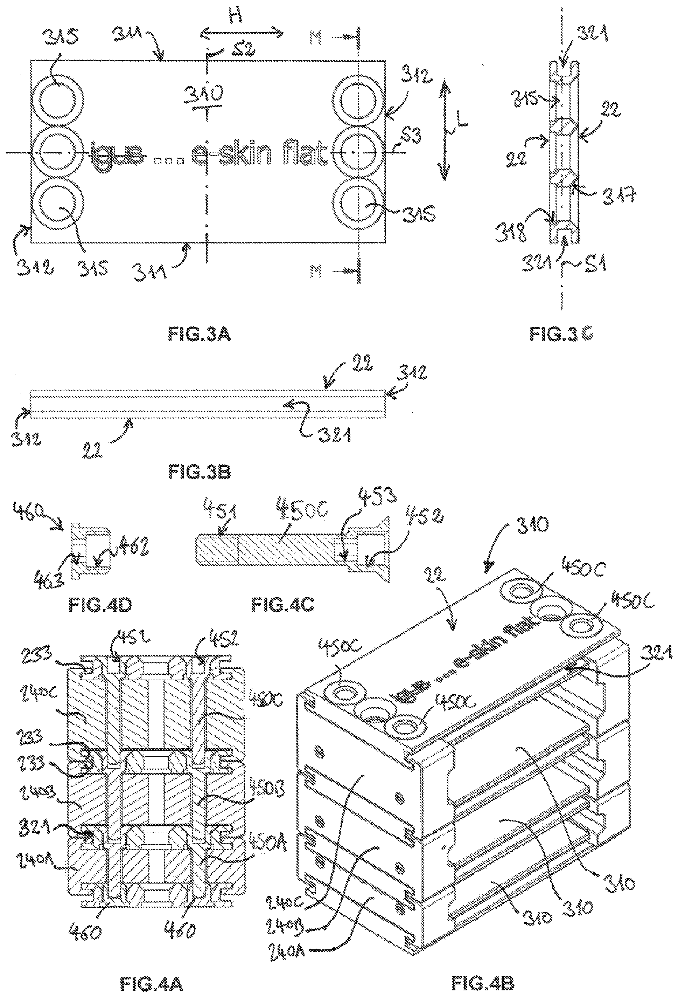

FIG.3A-3C zeigen eine bevorzugte Bauweise der Klemmplatten 310 in für sich genommen in näheren Details. Die Klemmplatten 310 entsprechend denen aus FIG.2A-2D und sind als flache rechteckige Platten aus Metall, z.B. aus einem Aluminium-Extrusionsprofil auf die gewünschte Länge zugeschnitten (FIG.3A-3C zeigen nur rein Beispielhaft eine kürzere Bauform).

Die Klemmplatten 310 bilden an jeder Hauptseite eine von zwei einander abgewandten großen Hauptflächen 22 und werden mit ihrer Hauptrichtung H, die der Längserstreckung der Klemmplatte 310 entspricht, senkrecht zur Längsrichtung L der Umhüllung 2 (vgl. FIG.1A) bzw. Stützkette angeordnet. Vorzugsweise sind alle Klemmplatten 310 derselben Endbefestigungsvorrichtung baugleich (vgl. FIG.4B) und haben zwei lange Stirnseiten 311 in der Hauptrichtung H, quer zu welchen die Leitungen 8 durchgeführt werden, und zwei kurze Schmalseiten 312, welche parallel zur Längsrichtung L angeordnet werden. Wie FIG.3A-3B zeigen ist die Klemmplatte 310 mit einer rechteckigen Grundfläche und mit ebenen, flächigen Hauptflächen ausgeführt, und hat somit eine platzsparende Bauweise, u.a. bei der Lagerung und beim Transport.

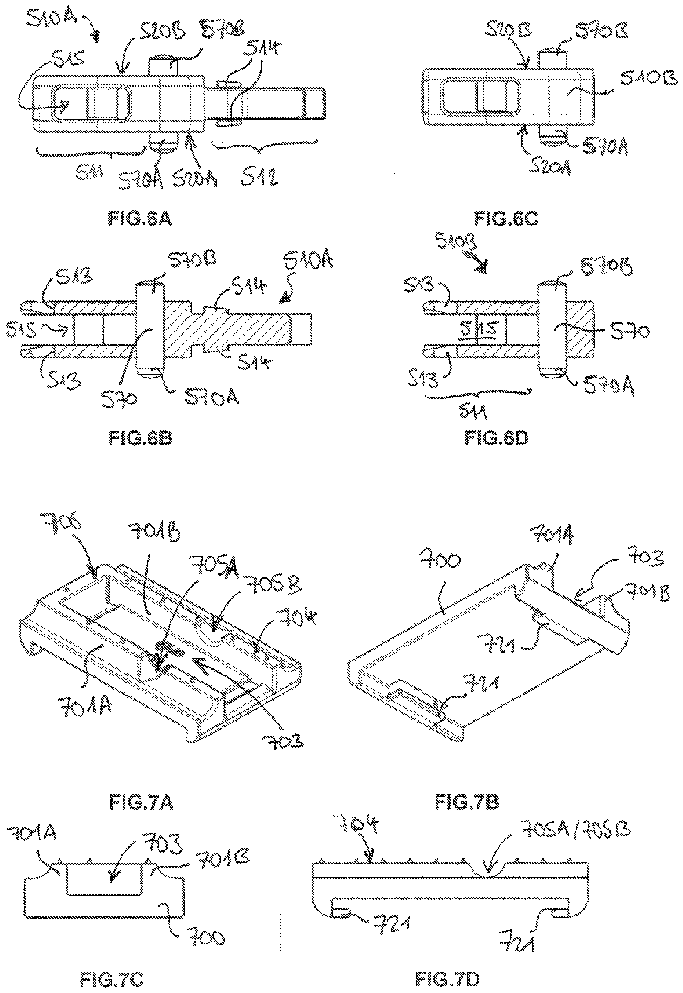

Wie FIG.3A-3C deutlicher zeigen, hat die Klemmplatte 310 hat, wie auch in FIG2A-2D an jeder langen Stirnseite 311 in Längsrichtung offene bzw. zugängliche stirnseitige Haltenut 321. Wie aus FIG.3B-3C ersichtlich haben beide Haltenuten 321 einen durchgehend gleichbleibenden, hier etwa viereckigen Querschnitt von der einen Schmalseite 312 zur anderen Schmalseite 312. Beide Haltenuten 321 öffnen in Querrichtung offen an den Schmalseiten 312. So können von beiden Seiten Halteelemente, z.B. Zugentlastungselemente 23A, 23B, 23C, 23D für Enden von Leitungen, Plattenverbinder 240A, 240B, oder Halteelemente für endseitige Kettenglieder (vgl. FIG.7A-7D), eingeschoben werden. Solche Halteelemente sind dann mittels entsprechender in beide Haltenuten 321 eingreifender Zungen 233, z.B. baugleiche, spiegelsymmetrische Klauen eines Verbindungsbereichs 230 wie oben beschrieben, an der Klemmplatte 310 montierbar. Dabei sind die montierten Halteelemente sowohl in Längsrichtung L als auch senkrecht zu den Hauptflächen 22 an der Klemmplatte 310 formschlüssig gehalten, sodass diese zusammen mit der Klemmplatte abnehmbar bzw. wieder montierbar sind. Zudem sind die Halteelemente in der Hauptrichtung H frei an der Klemmplatte 310 verschiebbar gehalten.

Entlang der Längsrichtung L sind nahe den Schmalseiten 312 jeweils beidseitig drei Befestigungslöcher 315 vorgesehen, als Durchgangsbohrungen für Schrauben (vgl. FIG.4A).

Die Klemmplatte 310 ist, funktional irrelevante Merkmale wie Beschriftung oder dgl. ausgenommen, zu ihren drei Hauptebenen im Wesentlichen spiegelsymmetrisch, wobei lediglich die Befestigungslöcher 315 nicht spiegelsymmetrisch zur Mittelebene S1 ausgeführt sind, welche parallel zur Hauptebene (aufgespannt durch die Richtungen L und Q) bzw. den ebenen Hauptflächen 22 liegt.

Die Klemmplatte 310 ist spiegelsymmetrisch bezüglich einer Mittelebene senkrecht zur Hauptebene entlang der Querrichtung S2 und spiegelsymmetrisch bezüglich einer Mittelebene S3 senkrecht zur Hauptebene entlang der Längsrichtung, sodass diese auch um 180° gedreht verwendbar ist.

FIG.4A-4B zeigen drei verschiedene Plattenverbinder 240A, 240B, 240C, die sich durch ihre Bauhöhe unterscheiden und im Übrigen der Beschreibung zu FIG2A-2D entsprechen. Die Plattenverbinder 240A, 240B, 240C verbinden die Klemmplatten 210, 310 im gewünschten Abstand zueinander parallel miteinander.

Bevorzugt hat der Bausatz für eine Endbefestigung, wie FIG.4A-4B zeigen, nebst einer Anzahl Klemmplatten jeweils mindestens vier Verlängerungsschrauben 450C an jeder Ecke der Klemmplatten 310.

FIG.4A zeigt drei Verlängerungsschrauben 450A, 450B, 450C unterschiedlicher Länge zur Auswahl der nutzbaren Höhe zwischen zwei Klemmplatten, passend zur Bauhöhe der Plattenverbinder 240A, 240B, 240C. Eine besonders leicht zu montierende und insbesondere die Wartung erleichternde Bauweise wird erreicht mit Verlängerungsschrauben 450A, 450B, 450C, die FIG.4C beispielhaft für die längste Verlängerungsschraube 450C zeigt. Die Verlängerungsschraube 450A, 450B, 450C sind wahlweise und modular zur axialen Verlängerung miteinander verbindbar und haben hierzu jeweils ein Außengewinde 451 sowie passend dazu am Schraubenkopf ein Innengewinde 452, in welches das Außengewinde 451 einer nächsten Verlängerungsschraube 450A, 450B, 450C einschraubbar ist. So können die einzelnen Lagen bzw. Umhüllungen 2 mit ihren Leitungen jeweils einzeln demontiert werden, ohne dass dabei auch alle unteren Lagen gelöst werden müssen. Dies vereinfacht die Wartung erheblich. Weiterhin können Endbefestigungen auf diese Art leicht und modular um eine Lage erweitert oder auch reduziert werden, ohne alle Klemmplatten 310 zu lösen.

An der untersten Klemmplatte 310, vgl. FIG.4A, sind Innengewinde-Buchsen 460, mit Innengewinde 462 passend zum Außengewinde 451 der Verlängerungsschrauben 450A, 450B, 450C vorgesehen, vorzugsweise eingepresst. Die Innengewinde-Buchsen 460 haben, wie FIG.4D zeigt, Zum Befestigen bzw. Lösen der Schraubverbindung haben die Verlängerungsschrauben 450A, 450B, 450C am Schraubenkopf, vorzugsweise in Verlängerung zum Innengewinde 452 axial vertieft, einen innenliegenden Innensechskant 453 für ein entsprechendes Werkzeug.

Die Klemmplatte 310 hat zum Versenken der Köpfe der Verlängerungsschrauben 450A, 450B, 450C an zumindest den zwei eckseitigen Befestigungslöchern 315 beidseitig gegenüberliegend eine konische Senkung 317 zur Aufnahme eines Schraubenkopfes und eine zylindrische Senkung 318 zum Aufnehmen des Kopfes bzw. Randes einer Innengewinde-Buchse 460, sodass Verlängerungsschrauben 450A, 450B, 450C und Innengewinde-Buchse 460 von den Hauptflächen nicht vorstehen.

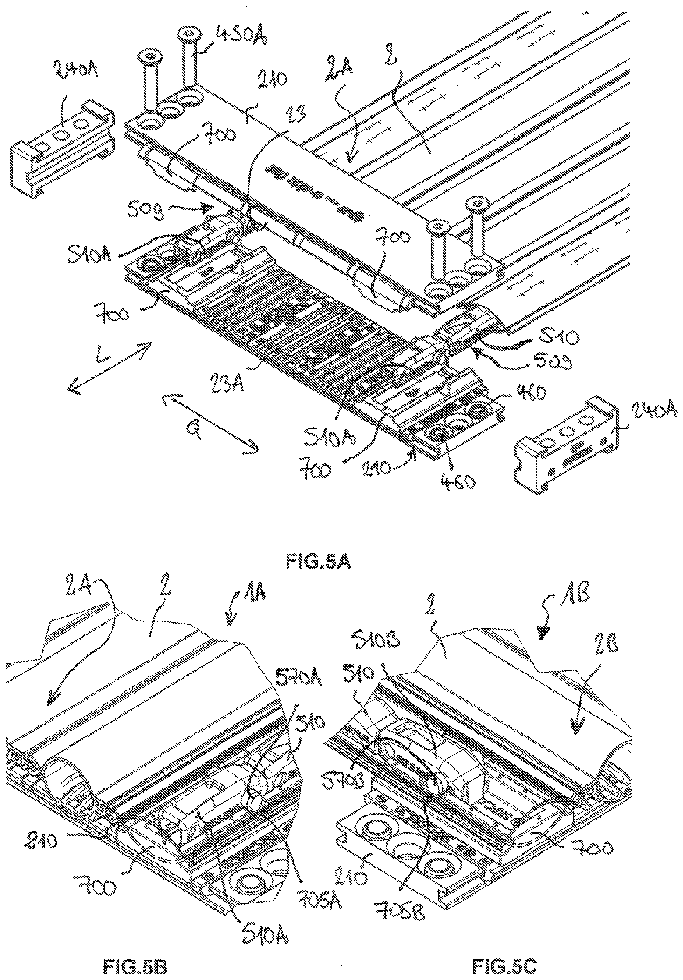

FIG.5A-5C zeigen eine rein beispielhaft konfigurierte Lage bzw. Ebene einer Endbefestigungsvorrichtung mit zwei Klemmplatten 210 nach FIG.2A-2D, z.B. mit Zugentlastungselementen 23A und Plattenverbinder 240A, bzw. den Merkmalen aus FIG.3A-3C. Nachfolgend wird ein weiterer, von den vorstehenden Merkmalen unabhängiger Erfindungsaspekt anhand der FIG.5-7 erläutert, wobei die sonstigen Merkmale denjenigen aus FIG.1A-1B und FIG.2A-2D entsprechen.

Die Lösung betrifft die Endbefestigung der Stützketten 509 bzw. deren Sicherung in Längsrichtung L an der Endbefestigungsvorrichtung 500, wobei hier beispielhaft zwei Stützketten 509 in den Aufnahmen seitlich außen in einer Umhüllung 2 dargestellt sind, die Anzahl und Position in Querrichtung H bzw. Q (FIG.1A-1B) jedoch anwendungsabhängig und modular wählbar ist.

Die Stützketten 509 erstrecken sich Längsrichtung L von einem ersten Ende 2A zu einem zweiten Ende 2B der flexiblen Umhüllung 2 um diese mit den darin geführten Leitungen (nicht gezeigt), sowie ggf. eine oder mehrere darüber liegende Lagen mit Trumen, zu stützen und einen vorgegebenen Radius des Umlenkbereichs 1C zu gewährleisten.

Die Stützketten 509 sind mit einer Vielzahl baugleicher Kettengliedern 510 aufgebaut, welche bevorzugt die Bauweise aus DE 20 2019 106 979 U1 bzw. der internationalen Patentanmeldung Nr. PCT/EP2020/085861 haben und hier daher nur kurz beschrieben sind. Jedes Kettenglied hat korrespondierende erste und zweite Gelenkelemente, die zur schwenkbaren Verbindung zweier Kettenglieder in einer Ebene im Wesentlichen senkrecht zur Querrichtung gestaltet sind. Der Körper des Kettenglieds hat hier z.B. in einem ersten Bereich 511 Gelenkaufnahmen 513 die mit Gelenkzapfen 514 eines zweiten Bereichs 512 zusammenwirken. Bei der bevorzugten Bauweise aus DE 20 2019 106 979 U1 wir der zweite Bereich 512 mit den Gelenkzapfen 514 in eine Aufnahme 515 des ersten Bereichs 511 aufgenommen, wobei die Gelenkzapfen 514 in die entsprechenden Gelenkaufnahmen 513 drehbar einrasten und nicht über die Seitenflächen 520A, 520B des Körpers des Kettenglieds vorstehen, vgl. FIG.6A-6B. Die Gelenkverbindung mit Gelenkzapfen 514 und Gelenkaufnahmen 513 erlaubt ein definiertes Verschwenken der Kettenglieder 510 zueinander, wobei der Schwenkwinkel in beide Richtungen begrenzt ist, wie in DE 20 2019 106 979 U1 bzw. PCT/EP2020/085861 beschrieben. Die vorliegende Erfindung ist jedoch auf jegliche anderen vergleichbare Stützketten anwendbar. Die Kettenglieder 510 sind vorzugsweise mit einem einteiligen Körper aus Kunststoff hergestellt, z.B. in Spritzguss-Technik.

Wie FIG.6A-6C am besten zeigen, sind an den beiden endseitigen Kettengliedern bzw. Endgliedern 510A, 510B jeweils zwei voneinander abgewandte Arretier-Vorsprünge 570A, 570B vorgesehen, die jeweils seitlich, in Richtung im Wesentlichen parallel zur Querrichtung Q bzw. H seitlich an der jeweiligen der äußeren Seitenfläche 520A bzw. 520B vorstehen. Die Arretier-Vorsprünge 570A, 570B stehen dabei deutlich über die Gelenkzapfen 514 seitlich hervor, und haben einen deutlich größeren Durchmesser. Die Arretier-Vorsprünge 570A, 570B sind im Beispiel aus FIG.6A-6D durch die Enden eines robusten Metallbolzens 570 gebildet, welcher durch eine nachgearbeitete Queröffnung bzw. Querbohrung in einem mittleren Rumpfbereich 516 der Endglieder 510A, 510B spielfrei eingepresst ist. Als Metallbolzen 570 kann ein geeignetes Standard-Bauteil aus dem Maschinenbau verwendet werden. Alternativ könnten die Arretiervorsprünge auch einteilig mit dem Körper des endseitigen Kettenglieds bzw. Endglieds 510A, 510B hergestellt sein, z.B. anhand einer speziellen Spritzgussform, eine Nacharbeitung mit separaten Bolzen erlaubt jedoch eine Herstellung aller Kettenglieder 510 als Gleichteile. In FIG.6C-6D ist ein verkürztes Endglied 510B gezeigt, dass durch Abtrennen bzw. Abschneiden des zweiten Bereichs 512 eines Kettenglieds 510A nach FIG.6A-6B bereitgestellt wird, was je nach Baulänge der Kettenglieder 510 in Bezug auf die Klemmplatten 210, 310 vorteilhaft sein kann. Auch hierzu, aber insbesondere für eine gute Krafteinleitung, ist es vorteilhaft wenn die Arretier-Vorsprünge 570A, 570B bzw. der Bolzen 570 in einem in Längsrichtung L mittleren Bereich, insbesondere im Rumpf bzw. Vollmaterial des Körpers des Kettenglieds 510A, 510B, zwischen Endbereichen 511, 512 vorgesehen wird.

Zum Arretieren der jeweiligen Stützkette 509 in Längsrichtung L sind an den Klemmplatten 210 jeweils ein Paar baugleicher, gegenüberliegender Kettenglied-Halteelemente 700 vorgesehen, and beiden Endbefestigungsvorrichtungen, vgl. FIG.5B bzw. FIG.5C.

Die Kettenglied-Halteelemente 700 sind in FIG.7A-7D näher gezeigt und haben jeweils zwei seitlich und in Querrichtung gegenüberliegende Halte-Vertiefungen 705A, 705B die als halbzylindrische Mulden ausgeführt sind um jeweils in etwa eine Hälfte des Querschnitts eines der Arretier-Vorsprünge 570A, 570B formschlüssig aufzunehmen. So können zum endseitigen Befestigen der Stützkette 509 anhand ihrer Endglieder 510A, 510B jeweils an beiden Endbefestigungen jeweils paarweise zwei Kettenglied-Halteelemente 700 als Gleichteile genutzt werden, was die Handhabung und u.a. Lagerhaltung vereinfacht und durch höhere Stückzahlen Kosten senkt.

Die beiden seitlichen Arretier-Vorsprünge 570A, 570B an jedem Endglied 510A, 510B greifen zum Arretieren jeweils in die entsprechende Halte-Vertiefung 705A, 705B im zugeordneten Kettenglied-Halteelement eingreifen, zum Arretieren der Stützkette 509 in Längsrichtung L.

Wie in FIG.5A in Explosionsdarstellung ersichtlich ist jedem der endseitigen Kettenglieder 510A, 510B jeweils ein Paar Kettenglied-Halteelemente 700 zugeordnet, die einander zugewandt liegen, und bezüglich eine Ebene parallel zur Hauptfläche 22 der Klemmplatten 210 (parallel zur Längsrichtung L und Querrichtung Q) gegenüberliegend und fluchtend angeordnet sind, um die Kettenglieder 510A, 510B im montierten Zustand dazwischen aufzunehmen und ggf. einzuklemmen. Hierzu hat das Kettenglied-Halteelement 700 jeweils zwei in Längsrichtung verlaufende gegenüberliegenden Seitenwände 701A, 701B und dazwischen, eine zur Hauptebene und in Längsrichtung L offen mündende Aufnahme 703 für ein endseitiges Kettenglied 510A, 510B. Die Seitenwände 701A, 701B haben eine obere Fläche 704 die mit der Montage an der Klemmplatte 210, 310 parallel zur Hauptfläche der Klemmplatte 210, 310 bzw. der Ebene aufgespannt durch Längsrichtung L und Querrichtung Q angeordnet wird.

Die Halte-Vertiefungen 705A, 705B sind jeweils in einer der Seitenwände 701A, 701B vorgesehen und beidseitig, insbesondere zur Aufnahme 703 hin offen, sowie auch zum gegenüberliegenden Halteelement 700 bzw. zur Umhüllung 2 hin an der oberen Fläche 704 offen. So können Kettenglieder 510A, 510B werkzeugfrei eingesetzt und wieder entnommen werden, d.h. die Stützkette kann endseitig an den gegenüberliegenden Klemmplatten 210, 310 werkzeugfrei gelöst und befestigt werden.

Die Aufnahme 703 ist so dimensioniert, dass dies vorzugsweise wenigstens 25% bis zu nahezu 50% der Bauhöhe des endseitigen Kettenglieds 510A, 510B aufnimmt, wie FIG.5B-5C veranschaulichen. Vorzugsweise umgreifen Paare aus gegenüberliegenden Halte-Vertiefungen 705A, 705B jeweils im Wesentlichen vollständig bzw. über nahezu den gesamten Umfang den zusammenwirkenden Arretier-Vorsprung 570A, 570B.

An der oberen Fläche 704 der Seitenwände 701A, 701B haben Greif- bzw. Krallenelemente zur Längssicherung einer die Stützkette 509 umgebenden Umhüllung 2, sodass auch diese bzw. die Aufnahme der Stützkette mit gesichert wird. Vorteilhaft wird die Umhüllung bis endseitig in Anlage mit einer Abschlusswand 706 der Kettenglied-Halteelemente 700 geführt, sodass die entsprechende Aufnahme ohne Zusatzmaßnahme möglichst staubdicht verschlossen wird mit der Montage der Endbefestigung. Vorteilhaft hierbei sind die einfache Geometrie des Kettenglied-Halteelements 700 und der Arretier-Vorsprünge 570A, 570B, ohne besondere Hinterschneidungen und scharfe Kanten, sodass die Umhüllung nicht beschädigt wird bei ihrem Einklemmen zwischen den Kettenglied-Halteelementen 700 zusammen mit dem jeweiligen Endglied 710A, 710B. Das Kettenglied-Halteelemente 700 ist vorzugsweise einteilig aus Kunststoff hergestellt sind, insbesondere als Spritzgussteil.

Das Kettenglied-Halteelement 700 hat an von der Vorderseite mit der Aufnahme 703 abgewandten Rückseite an beiden Längsenden zwei einander zugewandte Zungen bzw. Klauen 721 die zur Verbindung, insbesondere in Art einer Feder-Nut-Verbindung, mit jeweils einer der zwei abgewandten stirnseitigen Haltenuten 221, 312 an einer Klemmplatte 210, 310 der Endbefestigung zusammenwirken. Zur robusten Befestigung der Stützkette 509 ist somit lediglich eine geringfügige Nacharbeitung zur Bereitstellung der Arretier-Vorsprünge 570A, 570B an beiden Endgliedern 710A, 710B sowie ein einziges Gleichteil 700 erforderlich.

Die vorgeschlagene Gestaltung hat weiterhin den besonderen Vorteil, dass die Stützketten 509, welche beim Verfahren Verschleiß unterliegen, ebenso einfach ausgetauscht werden können wie Leitungen, da keine besonderen Befestigungsmittel, wie etwa vertikale Schrauben oder Bolzen durch die Stützketten und die Klemmplatten vorgesehen sind. Das Lösen der beiden Klemmplatten 210, 310 einer Lage löst zugleich auch die Längs-Arretierung bzw. Befestigung der Stützketten, und stellt diese umgekehrt beim Verbinden entsprechend mit her, sodass die Montage und Wartung deutlich vereinfacht werden.

## Patentansprüche

1. Bausatz mit Stützkette (9; 509) und Kettenglied-Halteelementen (700), für eine Leitungsführungsvorrichtung (1), umfassend:
- mindestens eine Stützkette (9; 509), vorzugsweise zwei Stützketten, die sich in Längsrichtung (L) von einem ersten Ende zu einem zweiten Ende erstreckt, und die eine Vielzahl einzelner Kettenglieder (510) umfasst, die gelenkig miteinander verbunden sind, wobei jedes Kettenglied (510) einen Körper mit zwei äußeren Seitenflächen (520A, 520B) und korrespondierende erste und zweite Gelenkelemente aufweist, die zur schwenkbaren Verbindung zweier Kettenglieder (510) in einer Ebene, die im Wesentlichen senkrecht zu einer Querrichtung (Q) der Längsrichtung liegt, gestaltet sind;
- zwei Kettenglied-Halteelemente (700) zum Arretieren in Längsrichtung (L) jeweils eines zugeordneten endseitigen Kettenglieds am ersten bzw. zweiten Ende der Stützkette (9; 509) zwischen zwei Klemmplatten (210, 310);
wobei die Stützkette (9; 509) zwei endseitige Kettenglieder (510A, 510B) aufweist, die zum Arretieren in Längsrichtung (L) bestimmt sind, **dadurch gekennzeichnet,**
- **dass** beide endseitigen Kettenglieder jeweils zwei voneinander abgewandte Arretier-Vorsprünge (570A, 570B) umfassen, die jeweils in Richtung im Wesentlichen parallel zur Querrichtung (Q) über die Gelenkelemente des jeweiligen endseitigen Kettenglieds hinaus seitlich an einer der äußeren Seitenflächen (520A, 520B) vorstehen und
- **dass** beide Kettenglied-Halteelemente (700) jeweils zwei seitlich und in Querrichtung (Q) gegenüberliegende Halte-Vertiefungen (705A, 705B) aufweisen; und
- **dass** die Arretier-Vorsprünge (570A, 570B) beider endseitiger Kettenglieder (510A, 510B) zum Arretieren mit jeweils beiden Halte-Vertiefungen (705A, 705B) im zugeordneten Kettenglied-Halteelement (700) eingreifend zusammenwirken.

2. Bausatz nach Anspruch 1, **dadurch gekennzeichnet, dass** jedem der endseitigen Kettenglieder (510A, 510B) jeweils ein Paar Kettenglied-Halteelemente (700) zugeordnet sind, die einander zugewandt und bezüglich einer Hauptebene parallel zur Längsrichtung (L) und Querrichtung (Q) gegenüberliegend anordenbar sind, und jeweils zwei in Längsrichtung (L) verlaufende gegenüberliegenden Seitenwände (701A, 701B) aufweisen, wobei jedes Kettenglied-Halteelement (700) eines Paars zwischen den Seitenwänden (701A, 701B) eine zur Hauptebene und in Längsrichtung (L) offene Aufnahme (703) für ein endseitiges Kettenglied (510A, 510B) bildet, wobei die Aufnahme (703) vorzugsweise wenigstens 25% bis zu nahezu 50% der Bauhöhe des endseitigen Kettenglieds (510A, 510B) aufnimmt, wobei in jeder Seitenwand (701A, 701B) je eine Halte-Vertiefung (705A, 705B) vorgesehen ist, insbesondere zur Aufnahme (703) und zur Hauptebene hin offen vorgesehen ist, sodass zwei gegenüberliegende Halte-Vertiefungen (705A, 705B) jeweils einen der Arretier-Vorsprünge (570A, 570B) beidseitig zumindest teilweise, vorzugsweise im Wesentlichen vollständig umgreifen, wobei alle Kettenglied-Halteelemente (700) vorzugsweise baugleich ausgeführt sind.

3. Bausatz nach einem der Ansprüche 1 bis 2, **dadurch**
**gekennzeichnet, dass**
die Arretier-Vorsprünge (570A, 570B) vorzugsweise in einem in Längsrichtung (L) mittleren Bereich des Kettenglieds (510A, 510B) zwischen Endbereichen mit den korrespondierende ersten und zweiten Gelenkelementen vorgesehen sind.

4. Bausatz nach einem der Ansprüche 1 bis 3, insbesondere nach Anspruch 2, **dadurch gekennzeichnet, dass** die in Längsrichtung (L) verlaufenden gegenüberliegenden Seitenwände (701A, 701B) jedes Kettenglied-Halteelements (700) eine obere Fläche im Wesentlichen parallel zur Hauptebene aufweisen, an welchen Greif- bzw. Krallenelemente zur Längssicherung (L) einer die Stützkette (9; 509) umgebenden Umhüllung (2) vorgesehen sind.

5. Bausatz nach einem der Ansprüche 1 bis 4, **dadurch gekennzeichnet, dass** alle Kettenglied-Halteelemente (700) baugleich und einteilig ausgeführt sind und vorzugweise aus Kunststoff hergestellt sind, insbesondere als Spritzgussteile; und/oder
die Kettenglied-Halteelemente (700) an einer Vorderseite eine zur Hauptebene und in Längsrichtung (L) offene Aufnahme (703) für ein endseitiges Kettenglied (510A, 510B) bildet und an einer Rückseite an beiden Längsenden einander zugewandte Zungen (721) aufweist zur Verbindung, insbesondere in Art einer Feder-Nut-Verbindung, mit jeweils einer von zwei abgewandten stirnseitigen Haltenuten (221; 321) an einer Klemmplatte (210; 310) der Endbefestigung.

6. Bausatz nach einem der Ansprüche 1 bis 5, **dadurch gekennzeichnet, dass**
die Kettenglieder mit einem einteiligen Körper aus Kunststoff hergestellt sind, insbesondere als Spritzgussteile, wobei
- die zwei voneinander abgewandten Arretier-Vorsprünge (570A, 570B) eines endseitigen Kettenglieds (510A, 510B) durch die Enden eines eine Queröffnung im Kettenglied durchgreifenden und beidseitig seitlich vorstehenden separaten Bolzens, Zapfens oder dgl. gebildet sind; oder
- die zwei voneinander abgewandten Arretier-Vorsprünge (570A, 570B) eines endseitigen Kettenglieds (510A, 510B) einteilig mit dem Körper des Kettenglieds hergestellt sind und beidseitig vorstehen.

7. Bausatz nach einem der Ansprüche 1 bis 6, **dadurch gekennzeichnet, dass** die Arretier-Vorsprünge (570A, 570B) formschlüssig und/oder werkzeugfrei lösbar in den Halte-Vertiefungen (705A, 705B) gehalten sind.

8. Verwendung einer Stützkette (9; 509) für den Bausatz nach einem der Ansprüche 1 bis 7, wobei die Stützkette eine Vielzahl verbundener Kettenglieder (510) umfasst, wobei jedes Kettenglied (510) jeweils einen Körper mit einem vorderen ersten Längsabschnitt sowie einen dazu komplementären hinteren zweiten Längsabschnitt umfasst, mit zwei Seitenteilen welche die äußeren Seitenflächen (520A, 520B) aufweisen und zwischen denen ein Freiraum vorgesehen ist in welchen der erste Längsabschnitt eines angrenzenden folgenden Kettenglieds (510) einführbar ist, wobei die ersten Gelenkelemente zwei seitliche im Wesentlichen parallel zur Querrichtung (Q) am ersten Längsabschnitt vorstehende Gelenkzapfen (514) sind und die zweiten Gelenkelemente zwei korrespondierende Gelenkaufnahmen (513) in den beiden Seitenteilen sind, zur schwenkbaren Aufnahme der Gelenkzapfen eines angrenzenden folgenden Kettenglieds, wobei der Körper einen mittleren Bereich, insbesondere zwischen dem ersten Längsabschnitt und dem Freiraum im zweiten Längsabschnitt , umfasst,
wobei die Stützkette zwei endseitige Kettenglieder (510A, 510B) aufweist;
wobei die beiden endseitigen Kettenglieder jeweils zwei voneinander abgewandte Arretier-Vorsprünge (570A, 570B) umfassen, die jeweils in Richtung im Wesentlichen parallel zur Querrichtung (Q) über die Gelenkelemente des jeweiligen endseitigen Kettenglieds hinaus seitlich an einer der äußeren Seitenflächen (520A, 520B) vorstehen, wobei an mindestens einem, vorzugsweise an beiden endseitigen Kettenglied (510A, 510B), die Arretier-Vorsprünge (570A, 570B) am mittleren Bereich (516) vorgesehen sind, und an beiden endseitigen Kettengliedern (510A, 510B), die Arretier-Vorsprünge (570A, 570B) zum Arretieren des jeweiligen endseitigen Kettenglieds der Stützkette (9; 509) in Längsrichtung (L) zwischen zwei Klemmplatten durch Zusammenwirken der Arretier-Vorsprünge (570A, 570B) mit entsprechenden seitlich und in Querrichtung (Q) gegenüberliegenden Halte-Vertiefungen (705A, 705B) eines Kettenglied-Halteelements einer Endbefestigung vorgesehen sind.

9. Verwendung nach Anspruch 8, **dadurch gekennzeichnet, dass** die Arretier-Vorsprünge (570A, 570B) des jeweiligen endseitigen Kettenglieds (510A, 510B) durch Enden eines eine Queröffnung im endseitigen Kettenglied durchgreifenden und beidseitig seitlich vorstehenden separaten Bolzens, Zapfens oder dgl. gebildet sind; oder
dass die Arretier-Vorsprünge (570A, 570B) des jeweiligen endseitigen Kettenglieds (510A, 510B) einteilig mit dem Körper des endseitigen Kettenglieds hergestellt sind.

10. Bausatz nach einem der Ansprüche 1 bis 7, **gekennzeichnet durch** eine Klemmpatte (210; 310) für eine Endbefestigung einer flexiblen Umhüllung (2) umfassend zwei kurze Schmalseiten (312) parallel zu einer Längsrichtung (L), die einer Längsrichtung einer festzulegenden Stützkette (9; 509) entspricht, und zwei lange Stirnseiten (311) parallel zu einer Querrichtung (Q), sowie zwei abgewandte Hauptflächen parallel zu einer Hauptebene, wobei die Klemmplatte (210; 310) plattenartig ausgeführt ist, wobei an jeder Stirnseite (311) eine in Längsrichtung (L) offene stirnseitige Haltenut (221; 321) vorgesehen ist, welche mit durchgehend gleichem Querschnitt von der einen zur anderen Schmalseite (312) verläuft und dort in Querrichtung (Q) offen mündet, sodass insbesondere Halteelemente (700), z.B. für Enden zu führender Leitungen (8) oder für endseitige Kettenglieder (510A, 510B), mittels in beide Haltenuten (221; 321) eingreifender Zungen (721) in Querrichtung (Q) einschiebbar und verschiebbar an der Klemmplatte (210, 310) montierbar sind, insbesondere wobei mindestens zwei, vorzugsweise drei, Befestigungslöcher (315) entlang der Längsrichtung (L) und nahe den Schmalseiten (312) angeordnet sind.

11. Bausatz nach Anspruch 10, umfassend mindestens vier Verlängerungsschrauben (450A, 450B, 450C), mit je einem Außengewinde (451) sowie einem Innengewinde (452) am Schraubenkopf passend zum Außengewinde (451), sowie entsprechende Innengewinde-Buchsen (460) passend zum Außengewinde (451), vorzugsweise wobei jede Klemmplatte (210, 310) an mindestens zwei Befestigungslöchern (315) jeder Schmalseite (312), jeweils beidseitig gegenüberliegend am Befestigungsloch (315) Senkungen (317; 318) aufweist, insbesondere eine konische Senkung (317) zur Aufnahme eines Schraubenkopfes und eine zylindrische Senkung (318) zum Einpressen einer Innengewinde-Buchse (460).

12. Bausatz nach Anspruch 11, umfassend Verlängerungsschrauben (450A, 450B, 450C) unterschiedlicher Länge, insbesondere in drei oder mehr unterschiedlichen Längen, zur Auswahl der nutzbaren Höhe zwischen zwei Klemmplatten (210; 310).

13. Bausatz nach einem der Ansprüche 10 bis 12, **dadurch gekennzeichnet, dass** die Klemmplatte mit einer rechteckigen Grundfläche und mit ebenen, flächigen Hauptflächen ausgeführt ist.

14. Bausatz nach einem der Ansprüche 10 bis 13, **dadurch gekennzeichnet, dass** die Klemmplatte (210, 310) bezüglich mindestens zwei von drei Mittelebenen spiegelsymmetrisch ausgeführt ist, insbesondere bezüglich mindestens drei Mittelebenen im Wesentlichen spiegelsymmetrisch ausgeführt ist, nämlich der Mittelebene parallel zur Hauptebene, der Mittelebene senkrecht zur Hauptebene entlang der Längsrichtung (L) und der Mittelebene senkrecht zur Hauptebene entlang der Querrichtung (Q).

## Claims

1. A kit comprising a support chain (9; 509) and chain link retaining elements (700) for a cable guide device (1), comprising:
- at least one support chain (9; 509), preferably two support chains, extending in the longitudinal direction (L) from a first end to a second end, and comprising a plurality of individual chain links (510) that are articulated to one another, wherein each chain link (510) has a body with two outer side surfaces (520A, 520B) and corresponding first and second joint elements configured to pivotally connect two chain links (510) in a plane that is substantially perpendicular to a transverse direction (Q) of the longitudinal direction;
- two chain link retaining elements (700) for locking, in the longitudinal direction (L), a respective associated end chain link at the first or second end of the support chain (9; 509) between two clamping plates (210, 310);
wherein the support chain (9; 509) comprises two end chain links (510A, 510B) intended for locking in the longitudinal direction (L), **characterized in**
- **that** both end chain links each comprise two locking projections (570A, 570B) facing away from one another, which each project laterally from one of the outer side surfaces (520A, 520B) beyond the joint elements of the respective end chain link in a direction substantially parallel to the transverse direction (Q), and
- **that** both chain link retaining elements (700) each have two retaining recesses (705A, 705B) that are opposite one another laterally and in the transverse direction (Q); and
- **that** the locking projections (570A, 570B) of both end chain links (510A, 510B) cooperate in a manner engaging with both retaining recesses (705A, 705B) in the associated chain link retaining element (700) for locking.

2. Kit according to claim 1, **characterized in that** each of the end chain links (510A, 510B) is assigned a pair of chain link retaining elements (700), which can be arranged facing each other and opposite each other relative to a main plane parallel to the longitudinal direction (L) and the transverse direction (Q) and which each have two opposing side walls (701A, 701B), wherein each chain link retaining element (700) of a pair forms, between the side walls (701A, 701B), a receptacle (703) that is open toward the main plane and in the longitudinal direction (L) for an end chain link (510A, 510B), wherein the receptacle (703) preferably accommodates at least 25% up to nearly 50% of the construction height of the end chain link (510A, 510B), and wherein in each side wall (701A, 701B) a respective retaining recess (705A, 705B) is provided, in particular open toward the receptacle (703) and the main plane, such that two opposing retaining recesses (705A, 705B) each surround one of the locking projections (570A, 570B) on both sides at least partially, preferably substantially completely, wherein all chain link retaining elements (700) are preferably of identical construction.

3. Kit according to any one of claims 1 to 2, **characterized in that**
the locking projections (570A, 570B) are preferably provided in a central region of the chain link (510A, 510B) in the longitudinal direction (L) between end regions with the corresponding first and second joint elements.

4. Kit according to any one of claims 1 to 3, in particular according to claim 2, **characterized in that** the opposing side walls (701A, 701B) of each chain link retaining element (700) running in the longitudinal direction (L) have an upper surface substantially parallel to the main plane, on which gripping or claw elements are provided for longitudinal securing (L) of a sheath (2) surrounding the support chain (9; 509).

5. Kit according to any one of claims 1 to 4, **characterized in that** all chain link retaining elements (700) are of identical single-piece construction and are preferably made of plastic, in particular as injection-molded parts; and/or
the chain link retaining elements (700) form, on a front side, a receptacle (703) that is open toward the main plane and in the longitudinal direction (L) for an end chain link (510A, 510B) and, on a rear side, have tongues (721) at both longitudinal ends facing each other for connection, in particular in the manner of a tongue-and-groove joint, with a respective one of two end-face retaining grooves (221; 321) facing away from each other on a clamping plate (210; 310) of the end fastening.

6. Kit according to any one of claims 1 to 5, **characterized in that**
the chain links are manufactured from a one-piece plastic body, in particular as injection-molded parts, wherein
- the two locking projections (570A, 570B) of an end chain link (510A, 510B) facing away from each other are formed by the ends of a separate bolt, pin, or the like that passes through a transverse opening in the chain link and protrudes laterally on both sides; or
- the two locking projections (570A, 570B) of an end chain link (510A, 510B), which face away from each other, are formed integrally with the body of the chain link and protrude on both sides.

7. Kit according to any one of claims 1 to 6, **characterized in that** the locking projections (570A, 570B) are held in the retaining recesses (705A, 705B) by form-fit engagement and/or can be released without tools.

8. Use of a support chain (9; 509) for the kit according to any one of claims 1 to 7, wherein the support chain comprises a plurality of interconnected chain links (510), each chain link (510) comprising a body with a front first longitudinal section and a rear second longitudinal section complementary thereto, with two side parts that form the outer side surfaces (520A, 520B) and between which a free space is provided into which the first longitudinal section of an adjacent subsequent chain link (510) can be inserted, wherein the first joint elements comprise two lateral joint pins (514) projecting from the first longitudinal section substantially parallel to the transverse direction (Q) and the second joint elements are two corresponding joint receptacles (513) in the two side parts, for pivotably receiving the joint pins of an adjacent subsequent chain link, wherein the body comprises a central region, in particular between the first longitudinal section and the free space in the second longitudinal section,
wherein the support chain comprises two end chain links (510A, 510B);
wherein the two end chain links each comprise two locking projections (570A, 570B) facing away from each other, which each project laterally beyond the joint elements of the respective end chain link in a direction substantially parallel to the transverse direction (Q) on one of the outer side surfaces (520A, 520B), wherein on at least one, preferably both, end chain links (510A, 510B), the locking projections (570A, 570B) are provided in the central region (516), and on both end chain links (510A; 510B), the locking projections (570A, 570B) are provided for locking the respective end chain link of the support chain (9; 509) in the longitudinal direction (L) between two clamping plates through the interaction of the locking projections (570A, 570B) with corresponding retaining recesses (705A, 705B) of a chain link retaining element of an end fastener, which retaining recesses are located opposite laterally and in the transverse direction (Q).

9. Use according to claim 8, **characterized in that** the locking projections (570A, 570B) of the respective end chain link (510A, 510B) are formed by the ends of a separate bolt, pin, or the like that passes through a transverse opening in the end chain link and protrudes laterally on both sides; or
that the locking projections (570A, 570B) of the respective end chain link (510A, 510B) are formed integrally with the body of the end chain link.

10. Kit according to any one of claims 1 to 7, **characterized by** a clamping plate (210; 310) for end fastening of a flexible sheath (2), comprising two short narrow sides (312) parallel to a longitudinal direction (L) that corresponds to a longitudinal direction of a support chain (9; 509) to be fixed, and two long end faces (311) parallel to a transverse direction (Q), as well as two main surfaces facing away and parallel to a main plane, wherein the clamping plate (210; 310) is plate-like in design, wherein a front-side retaining groove (221; 321), open in the longitudinal direction (L), is provided on each end face (311), which retaining groove extends with a consistently uniform cross-section from one narrow side to the other narrow side (312) and opens there in the transverse direction (Q), so that, in particular, retaining elements (700), e.g. for ends of cables (8) to be guided or for end chain links (510A, 510B), can be mounted to the clamping plate (210, 310) by insertion and displacement in the transverse direction (Q) via tabs (721) that engage in both retaining grooves (221, 321), in particular, wherein at least two, preferably three, mounting holes (315) are arranged along the longitudinal direction (L) and near the narrow sides (312).

11. Kit according to claim 10, comprising at least four extension screws (450A, 450B, 450C), each having an external thread (451) and an internal thread (452) on the screw head matching the external thread (451), as well as corresponding female threaded sleeves (460) matching the external thread (451), preferably wherein each clamping plate (210, 310) has counterbores (317; 318) on at least two mounting holes (315) of each narrow side (312), in each case opposite each other on both sides on the mounting hole (315), in particular a conical counterbore (317) for receiving a screw head and a cylindrical counterbore (318) for pressing in a female threaded sleeve (460).

12. Kit according to claim 11, comprising extension screws (450A, 450B, 450C) of different lengths, in particular in three or more different lengths, for selecting the usable height between two clamping plates (210; 310).

13. Kit according to any one of claims 10 to 12, **characterized in that** the clamping plate is designed with a rectangular base and with flat, planar main surfaces.

14. Kit according to any one of claims 10 to 13, **characterized in that** the clamping plate (210, 310) is designed to be mirror-symmetrical with respect to at least two of three central planes, in particular is designed to be substantially mirror-symmetrical with respect to at least three central planes, namely the central plane parallel to the main plane, the central plane perpendicular to the main plane along the longitudinal direction (L), and the central plane perpendicular to the main plane along the transverse direction (Q).

## Revendications

1. Kit comprenant une chaîne de support (9; 509) et des éléments de retenue de maillons de chaîne (700), destiné à un dispositif de guidage de câbles (1), comprenant:
- au moins une chaîne de support (9; 509), de préférence deux chaînes de support, s'étendant dans la direction longitudinale (L) d'une première extrémité à une deuxième extrémité, et comprenant une pluralité de maillons de chaîne individuels (510) reliés entre eux de manière articulée, chaque maillon de chaîne (510) comportant un corps avec deux faces latérales extérieures (520A, 520B) et des premier et deuxième éléments d'articulation correspondants, conçus pour relier de manière pivotante deux maillons de chaîne (510) dans un plan sensiblement perpendiculaire à une direction transversale (Q) de la direction longitudinale;
- deux éléments de retenue de maillons de chaîne (700) destinés à verrouiller, dans la direction longitudinale (L), respectivement un maillon de chaîne d'extrémité associé au niveau de la première et de la deuxième extrémité de la chaîne de support (9; 509) entre deux plaques de serrage (210, 310);
la chaîne de support (9; 509) comportant deux maillons de chaîne d'extrémité (510A, 510B) destinés à être verrouillés dans la direction longitudinale (L), **caractérisée en ce que**
- les deux maillons de chaîne d'extrémité comportent chacun deux saillies de verrouillage (570A, 570B) détournées l'une de l'autre qui font saillie latéralement sur l'une des faces latérales extérieures (520A, 520B) dans une direction sensiblement parallèle à la direction transversale (Q), au-delà des éléments d'articulation du maillon de chaîne d'extrémité concerné, et
- les deux éléments de retenue de maillons de chaîne (700) présentent chacun deux renfoncements de retenue (705A, 705B) opposés latéralement et dans la direction transversale (Q); et
- les saillies de verrouillage (570A, 570B) des deux maillons de chaîne d'extrémité (510A, 510B) coopèrent pour s'engager respectivement avec les deux renfoncements de retenue (705A, 705B) dans l'élément de retenue de maillon de chaîne (700) associé, pour le verrouillage.

2. Kit selon la revendication 1, **caractérisé en ce que**, à chacun des maillons de chaîne d'extrémité (510A, 510B) est associée respectivement une paire d'éléments de retenue de maillons de chaîne (700), qui peuvent être disposés face à face et vis à vis par rapport à un plan principal parallèle à la direction longitudinale (L) et à la direction transversale (Q), et qui présentent chacun deux parois latérales opposées (701A, 701B) s'étendant dans la direction longitudinale (L), chaque élément de retenue de maillon de chaîne (700) d'une paire formant, entre les parois latérales (701A, 701B), un logement (703) ouvert vers le plan principal et dans la direction longitudinale (L) pour un maillon de chaîne d'extrémité (510A, 510B), le logement (703) recevant de préférence au moins 25 % jusqu'à près de 50 % de la hauteur de construction du maillon de chaîne d'extrémité (510A, 510B), dans chaque paroi latérale (701A, 701B) étant prévu respectivement un renfoncement de retenue (705A, 705B), notamment ouvert vers le logement (703) et vers le plan principal, de sorte que deux renfoncements de retenue opposés (705A, 705B) entourent chacun l'une des saillies de verrouillage (570A, 570B) des deux côtés, au moins partiellement, de préférence pratiquement entièrement, tous les éléments de retenue des maillons de chaîne (700) étant de préférence de conception identique.

3. Kit selon l'une quelconque des revendications 1 à 2,
**caractérisé en ce que**
les saillies de verrouillage (570A, 570B) sont de préférence prévues dans une zone centrale, dans le sens longitudinal (L), du maillon de chaîne (510A, 510B) entre les zones d'extrémité comportant les premier et deuxième éléments d'articulation correspondants.

4. Kit selon l'une quelconque des revendications 1 à 3, en particulier selon la revendication 2, **caractérisé en ce que** les parois latérales opposées (701A, 701B) de chaque élément de retenue de maillon de chaîne (700) s'étendant dans la direction longitudinale (L) présentent une face supérieure sensiblement parallèle au plan principal, sur laquelle sont prévus des éléments de préhension ou des griffes pour la fixation longitudinale (L) d'une enveloppe (2) entourant la chaîne de support (9; 509).

5. Kit selon l'une quelconque des revendications 1 à 4, **caractérisé en ce que** tous les éléments de retenue de maillons de chaîne (700) sont de construction identique et réalisés d'un seul tenant et sont de préférence fabriqués en matière plastique, notamment sous forme de pièces moulées par injection; et/ou
les éléments de retenue des maillons de chaîne (700) présentent, sur une face avant, un logement (703) ouvert vers le plan principal et dans le sens longitudinal (L) destiné à recevoir un maillon de chaîne d'extrémité (510A, 510B) et, sur une face arrière, présentent aux deux extrémités longitudinales des languettes (721) tournées l'une vers l'autre pour l'assemblage, notamment sous la forme d'un assemblage à languette et rainure, avec respectivement l'une des deux rainures de retenue frontales opposées (221; 321) sur une plaque de serrage (210; 310) de la fixation d'extrémité.

6. Kit selon l'une quelconque des revendications 1 à 5, **caractérisé en ce que**
les maillons de chaîne sont fabriqués avec un corps monobloc en matière plastique, notamment sous forme de pièces moulées par injection, dans lequel
- les deux saillies de verrouillage (570A, 570B) détournées l'une de l'autre d'un maillon de chaîne d'extrémité (510A, 510B) sont formées par les extrémités d'un boulon, d'un tenon ou d'un élément similaire séparé, s'engageant dans une ouverture transversale du maillon de chaîne et faisant saillie latéralement des deux côtés; ou
- les deux saillies de verrouillage (570A, 570B) d'un maillon de chaîne d'extrémité (510A, 510B), détournées l'une de l'autre, sont réalisées d'un seul tenant avec le corps du maillon de chaîne et font saillie des deux côtés.

7. Kit selon l'une quelconque des revendications 1 à 6, **caractérisé en ce que** les saillies de verrouillage (570A, 570B) sont maintenues par complémentarité de forme et/ou de manière amovible sans outil dans les renfoncements de retenue (705A, 705B).

8. Utilisation d'une chaîne de support (9; 509) pour le kit selon l'une quelconque des revendications 1 à 7, la chaîne de support comprenant une pluralité de maillons de chaîne reliés entre eux (510), chaque maillon de chaîne (510) comprenant respectivement un corps avec une première partie longitudinale avant ainsi qu'une deuxième partie longitudinale arrière complémentaire à celle-ci, avec deux parties latérales qui présentent les faces latérales extérieures (520A, 520B) et entre lesquelles est prévu un espace libre dans lequel la première partie longitudinale d'un maillon de chaîne suivant adjacent (510) peut être insérée, les premiers éléments d'articulation comprenant deux tourillons d'articulation latéraux (514) faisant saillie de la première partie longitudinale, sensiblement parallèles à la direction transversale (Q) et les deuxièmes éléments d'articulation sont deux logements d'articulation correspondants (513) dans les deux parties latérales, destinés à recevoir de manière pivotante les tourillons d'articulation d'un maillon de chaîne suivant adjacent, le corps comprenant une zone centrale, en particulier entre la première section longitudinale et l'espace libre dans la deuxième section longitudinale,
la chaîne de support comportant deux maillons de chaîne d'extrémité (510A, 510B);
les deux maillons de chaîne d'extrémité comportant chacun deux saillies de verrouillage (570A, 570B) détournées l'une de l'autre, qui font saillie latéralement au-delà des éléments d'articulation du maillon de chaîne d'extrémité concerné, dans une direction sensiblement parallèle à la direction transversale (Q), sur l'une des faces latérales extérieures (520A, 520B), les saillies de verrouillage (570A, 570B) étant prévues, sur au moins l'un, de préférence sur les deux maillons d'extrémité (510A, 510B), dans la zone centrale (516), et sur les deux maillons de chaîne d'extrémité (510A; 510B), les saillies de verrouillage (570A, 570B) servent à verrouiller le maillon de chaîne d'extrémité correspondant de la chaîne de support (9; 509) dans la direction longitudinale (L) entre deux plaques de serrage, par coopération des saillies de verrouillage (570A, 570B) avec des rainures de retenue correspondantes (705A, 705B), situées latéralement et dans la direction transversale (Q) en face, d'un élément de retenue de maillon de chaîne d'une fixation d'extrémité.

9. Utilisation selon la revendication 8, **caractérisée en ce que** les saillies de verrouillage (570A, 570B) du maillon de chaîne d'extrémité respectif (510A, 510B) sont formées par les extrémités d'un boulon ou tenon séparé ou élément similaire s'engageant dans une ouverture transversale du maillon de chaîne d'extrémité et faisant saillie latéralement des deux côtés; ou
**en ce que** les saillies de verrouillage (570A, 570B) de chaque maillon de chaîne d'extrémité (510A, 510B) sont réalisées d'un seul tenant avec le corps du maillon d'extrémité.

10. Kit selon l'une quelconque des revendications 1 à 7, **caractérisé par** une plaque de serrage (210; 310) destinée à la fixation d'une extrémité d'une gaine flexible (2), comprenant deux côtés courts et étroits (312) parallèles à une direction longitudinale (L) qui correspond à la direction longitudinale d'une chaîne de support (9; 509), et deux côtés frontaux longs (311) parallèles à une direction transversale (Q), ainsi que deux faces principales détournées l'une de l'autre et parallèles à un plan principal, la plaque de serrage (210; 310) étant réalisée sous forme de plaque, une rainure de retenue frontale (221; 321), ouverte dans la direction longitudinale (L), étant prévue sur chaque côté frontal (311), laquelle rainure s'étend avec une section transversale constante d'un côté étroit à l'autre côté étroit (312) et débouche de manière ouverte à cet endroit dans le sens transversal (Q), de sorte que notamment des éléments de retenue (700), par exemple pour des extrémités de câbles (8) à guider ou pour des maillons de chaîne d'extrémité (510A, 510B), puissent être montés sur la plaque de serrage (210, 310) de manière à pouvoir être insérés et déplacés dans le sens transversal (Q) au moyen de languettes (721) s'engageant dans les deux rainures de retenue (221, 321), notamment au moins deux, de préférence trois, trous de fixation (315) étant disposés dans la direction longitudinale (L) et à proximité des côtés étroits (312).

11. Kit selon la revendication 10, comprenant au moins quatre vis d'extension (450A, 450B, 450C), chacune comportant un filetage extérieur (451) ainsi qu'un filetage intérieur (452) au niveau de la tête de vis, adapté au filetage extérieur (451), ainsi que des douilles à filetage intérieur (460) correspondantes, adaptées au filetage extérieur (451), de préférence chaque plaque de serrage (210, 310) présentant, au niveau d'au moins deux trous de fixation (315) de chaque côté étroit (312), des fraisages (317; 318) situés de part et d'autre du trou de fixation (315), en particulier une fraisage conique (317) destinée à recevoir une tête de vis et une fraisage cylindrique (318) destiné à l'insertion par pression d'une douille à filetage intérieur (460).

12. Kit selon la revendication 11, comprenant des vis d'extension (450A, 450B, 450C) de longueurs différentes, notamment en trois longueurs différentes ou plus, permettant de choisir la hauteur utile entre deux plaques de serrage (210; 310).

13. Kit selon l'une quelconque des revendications 10 à 12, **caractérisé en ce que** la plaque de serrage est réalisée avec une base rectangulaire et avec des surfaces principales planes et étendues.

14. Kit selon l'une quelconque des revendications 10 à 13, **caractérisé en ce que** la plaque de serrage (210, 310) est réalisée de manière symétrique par rapport à au moins deux des trois plans médians, et plus particulièrement de manière sensiblement symétrique par rapport à au moins trois plans médians, à savoir le plan médian parallèle au plan principal, le plan médian perpendiculaire au plan principal dans la direction longitudinale (L) et le plan médian perpendiculaire au plan principal dans la direction transversale (Q).
